# EUROPÄISCHE PATENTANMELDUNG

(11) **EP 2 796 808 A2**
(43) Veröffentlichungstag der Anmeldung: **29.10.2014**
(21) Anmeldenummer: 14166074.6
(22) Anmeldetag: 25.04.2014
(51) Int. Cl.: F24J 2/10

(54) **Strahlungsenergiesammler und Lamellen und Lamellenanordnung hierfür**

(30) Priorität: 26.04.2013 DE 102013207711
(71) Anmelder: Renner, Hans, 82467 Garmisch-Partenkirchen (DE)
(72) Erfinder: Renner, Hans, 82467 Garmisch-Partenkirchen (DE)
(74) Vertreter: Beetz & Partner

(57) **Zusammenfassung**

Ein Strahlungsenergiesammler (1) zum Sammeln von Strahlungsenergie einer Quelle, insbesondere der Sonne, hat einen ersten Träger (4) und eine am Träger (4) angebrachten Fluidführung (3). Er hat eine oder mehrere direkt oder indirekt am Träger (4) befestigten Lamellen (2) im Strahlungsweg vor der Fluidführung (3) und/oder direkt oder indirekt am Träger (4) befestigten Anbringungsvorrichtungen (5) hierfür. Ein paneelartiger Strahlungsenergiesammler (1) zum Sammeln von Strahlungsenergie einer Quelle, insbesondere der Sonne, hat einer Fluidführung (3) und eine mit der Fluidführung (3) direkt oder indirekt verbundene Isolierschicht (11), die von der Quelle aus betrachtet hinter der Fluidführung (3) liegt und als Wärmedämmung eines den Strahlungsenergiesammler (1) tragenden Dach- oder Wandbereichs eines Gebäudes ausgelegt ist.

## Beschreibung

Die Erfindung betrifft Strahlungsenergiesammler wie etwa Paneele von Flachkollektoren oder Vakuumröhrenkollektoren.

Solche Paneele können als Flachkollektoren oder als Vakuumröhrenkollektoren ausgelegt sein. Flachkollektoren zeichnen sich durch eine flache Bauweise und einer flachen Anordnung des Absorbers aus. Üblicherweise ist über der Absorberfläche mit einem dazwischen liegenden Luftspalt eine Glasscheibe als Abdeckung angebracht. Unterhalb der Absorberfläche befindet sich in den meisten Fallen eine Isolierung, vorzugsweise aus Mineralwolle. Der Absorber ist zumeist mit einer speziellen selektiven Beschichtung versehen, um einen möglichst hohen Anteil an Solarenergie in Form von Wärme zu absorbieren.

Die Wärmeenergie wird durch ein Leitungssystem, dass mit der Absorberfläche fest verbunden ist, mit Hilfe einer Flüssigkeit an einen Wärmespeicher abgeführt. Die Flachkollektoren haben jedoch den Nachteil, dass ihre Ausbeute bei ungünstigen Verhältnissen rapide sinkt. Daher wurden andere Kollektortypen entwickelt, die auch bei geringerer oder diffuser Einstrahlung sowie bei niedrigen Außentemperaturen noch passable Erträge liefern.

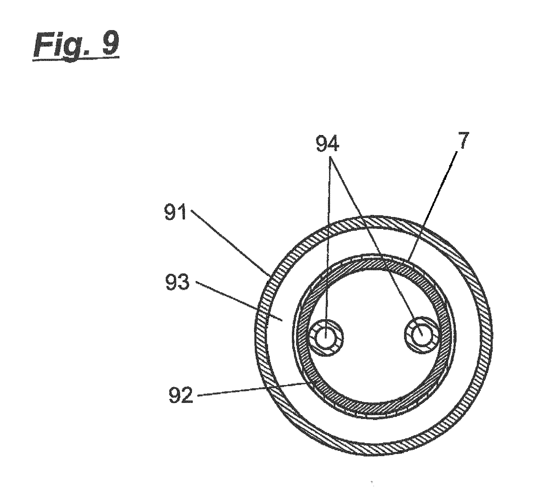

Vakuum-Röhren-Kollektoren, wie sie schematisch im Schnitt - ohne zugeordneten Reflektor - in Fig. 9 gezeigt sind - weisen zwei koaxial angeordnete Röhren 91, 92 auf, wobei die äußere transparent ist und die innere als Absorber 7 ausgebildet ist, indem die äußere Oberfläche absorbierend (schwarz) ausgebildet ist. Im Spalt 93 zwischen den beiden Röhren existiert ein Vakuum, das der thermischen Isolierung bei gleichzeitiger Strahlungsdurchlässigkeit dient. Die Strahlung dringt durch die äußere Röhre 91 und wird an der Absorptionsschicht 7 der zweiten inneren Röhre 93 absorbiert. Die Wärme wird an die Solarflüssigkeit, die durch Kupfer- oder Aluminiumrohre 94 im Innenrohr 92 geleitet wird, abgeführt und gelangt so in einen Wärmespeicher. Die Wärmeverluste sind hierbei auf Grund des Vakuums zwischen den Röhren minimal.

Es werden auch Vakuum-Röhren-Kollektoren-System angeboten, auf deren Unterseite hochreflektierender CPC-Spiegel (Compound Parabolic Concentrator) angebracht sind, um zusätzliche gestreute und direkte Sonneneinstrahlung auf den Absorber zu lenken. Sie sind derzeit die effektivsten Kollektoren, da die zusätzlichen Spiegel direkte Sonnenstrahlung und diffuses Licht hin zu den Vakuum-Röhren leiten. Dadurch können auch im Winter noch nennenswerte Erträge geliefert werden. Damit ist eine solare Heizungsunterstützung neben der Warmwasser-Bereitung auch in den Wintermonaten möglich. Sie sind allerdings teurer als Flachkollektoren.

Ein beiden Bauweisen gemeinsames Problem ist es, dass ihre Leistung jahreszeitlich bedingt stark schwankt. Da die Erdachse ca. 23° gegen die Normale zur Ekliptik geneigt ist, steht die Sommer im Winter um ca. 2*23°=46° niedriger über dem Horizont als im Sommer. Wenn Solarkollektoren darauf ausgelegt sind, im Winter ausreichend Wärme für Warmwasser und Heizung zu sammeln, werden sie im Sommer wegen der gegenläufigen Effekte von verringerter Nachfrage und vermehrtem Angebot an Strahlung zu viel Wärme sammeln. Ohne weiteres würden dann Überhitzungsekffekte eintreten, da im Sommer sowohl wegen der geringeren Nachfrage die Einlasstemeperatur am Einlass des Strahlungsenergiesammlers als auch wegen des höheren Angebots der Heizeffekt im Sammler selbst höher sind. Um Überhitzung zu verhindern, müssen Kühlstrukturen geschaffen oder andere Maßnahmen getroffen werden, was aufwändig und teilweise auch störanfällig ist.

Ein weiteres Problem ist es, dass bekannte Strahlungsenergiesammler nur unzureichend in den Dachaufbau integriert werden können und insbesondere strukturelle Merkmale wie Versigelungen und/oder Isolierungen teils redundant bzw. doppelt vorgesehen sind, was aufwändig ist und die Baugröße bzw. -höhe erhöht.

Die WO 99/23424 beschreibt einen Wärmeabsorber mit konkaven Reflektoren. Das Paneel ist dachziegelartig gestaltet.

Das deutsche Gebrauchsmuster 8816350 U1 beschreibt einen Kollektor-Speicher. Er weist einen Druckbehälter auf, der von einem absorbierenden Fluid durchflossen wird und dem ein Reflektor zugeorndet ist, der mit Isoliermaterial hinterfüllt ist.

Die DE 2725976 beschreibt fluiddurchströmte Absorberelemente, denen ein Reflektor zugeordnet ist, der einen Isolierkörper trägt.

Es ist eine Aufgabe der Erfindung, einen Strahlungsenergiesammler anzugeben, bei dem tages- und/oder jahreszeitlich bedingte Schwankungen der Sammlerleistung durch einfache Einrichtungen ausgeglichener sind.

Es ist eine weitere Aufgabe der Erfindung, einen Strahlungsenergiesammler anzugeben, der in moderne Bedachungsbauweisen integriert verwendet werden kann.

Diese Aufgaben werden mit den Merkmalen der unabhängigen Ansprüche gelöst. Abhängige Ansprüche sind auf bevorzugte Ausführungsformen der Erfindung gerichtet.

Ein Strahlungsenergiesammler (1) zum Sammeln von Strahlungsenergie einer Quelle, insbesondere der Sonne, hat einen ersten Träger (4) und eine am Träger (4) angebrachten strahlungsabsorbierende Fluidführung (3). Er hat eine oder mehrere direkt oder indirekt am Träger (4) befestigten Lamellen (2) im Strahlungsweg vor der strahlungsabsorbierenden Fluidführung (3) und/oder direkt oder indirekt am Träger (4) befestigten Anbringungsvorrichtungen (5) hierfür.

Die strahlungsabsorbierende Fluidführung (3) kann einen komplexen Aufbau aufweisen, etwa einerseits Fluidleitungen (94) für den Wärmetransport, andererseits einen mit den Leitungen thermisch verbundenen Absorber (7) zur Umwandlung von Strahlungsenergie in Wärmeenergie, und ggf. auch Isoliereinrichtungen zur Verringerung thermischer Verluste. Sie kann ein Vakuumröhrenkollektor sein. Die Fluidführung kann aber auch ohne Vakuumisolierung ausgebildet sein und bspw. direkt außen eine schwarze strahlungsabsorbierende Oberfläche aufweisen und innen direkt oder in weiteren thermisch gekoppelten Leitungen ein Fluid für den Wärmetransport führen.

Die Lamellen sind so dimensioniert und/oder voneinander beabstandet und/oder im Strahlengang vor dem Strahlungsenergiesammler angebracht oder anbringbar, dass sie an einem Referenztag (z. B. zur Wintersonnenwende am 21.12. oder statistisch kältester Tag des Jahres - 15. Januar oder 30. Januar oder an einem Tag im Herbst, etwa 1. oder 15. oder 30. Oktober) eine vergleichsweise geringe bis minimale, im Sommer (z. B. zur Sommersonnenwende am 21.6.) dagegen eine merkliche Abschattung der Sammeleinrichtungen bewirken. Dies kann durch passive, d. h. nach dem Verbau unbewegliche Anbringung und geeignete Dimensionierung der Lamellen erreicht werden, indem die unterschiedlichen Sonnenstände sommers und winters bzw. im Herbst ausgenützt werden. Die Lamellen können rechtwinklig zur Fluidführung oder parallel zu ihr verlaufen.

Die Lamellen 2 können so eingestellt/ausgerichtet bzw. einstellbar/ausrichtbar sein, dass sie im verbauten Zustand des Strahlungsenergiesammlers an einem bestimmten Referenztag im Jahr, z. B. Wintersonnenwende (21. Dezember auf der Nordhalbkugel, 21. Juni auf der südhalbkugel) oder Kältepol, vorzugsweise zum Tages-Sonnenhöchststand (mittags) am Verbauort um höchstens ±5° oder höchstens ±3° gegen die Ekliptik geneigt sind.

Allgemein kann als Kriterium für die Ausrichtung der Lamellen die über den Tag integrierte Abschattung bzw. Minderung der einfallenden Strahlungsenergie durch die Lamellen bei der jeweiligen Ausrichtung der Lamellen herangezogen werden. Die Ausrichtung kann dann winkelmäßig so sein, dass am Referenztag die Abschattung bzw. Minderung minimal ist, wobei hier aus praktischen Gesichtspunkten Toleranzen von höchstens ±10° oder höchstens ±5° oder höchstens ±3° oder höchstens ±1° zugelassen sein können.

Der Strahlungsenergiesammler kann einen ersten Reflektor mit einem konkaven Bereich zum Reflektieren von Strahlung von der Quelle zur Fluidführung hin aufweisen. Er kann mehrere Lamellen aufweisen, die in Strahlungsrichtung betrachtet mindestens zwei unterschiedliche Größen bzw. Abmessungen haben. Die Lamellen können eine Farbe und/oder eine der Quelle zugewandte Kante mit einer ungeradlinigen Kontur aufweisen, die nach ästhetischen Gesichtspunkten bestimmt sein kann.

Die Lamellen können planflächige Elemente sein, die selbsttragend und witterungsbeständig sein können und die als Material Metall, insbesondere Aluminium, und/oder einen Kunststoff aufweisen können.

Der Strahlungsenergiesammler kann als geradlinig, insbesondere rechtwinklig begrenztes Paneel gebaut sein, das mehrere geradlinige, parallel verlaufende und in paralleler oder serieller Fluidverbindung stehende Fluidführungen, insbesondere Vakuumröhrenkollektoren, aufweist, denen jeweils ein erster Reflektor zugeordnet ist, der länglich und sich in Richtung der Fluidführung erstreckend ausgebildet ist.

Um im Herbst bis in den Winter hinein bei kalten Außentemperaturen noch Strahlungsenergie wirksam sammeln zu können, ist es nötig, Strahlungsenergie auf einen Absorber zu sammeln, um diesen auf eine Temperatur zu bringen, die über der Temperatur eines Mediums in einem Wärmespeicher liegt. Dies erfordert relativ große Reflektoren. Diese führen dann im Sommer zu Überhitzungen. Die Wirkung der Lamellen ist es dann, dass trotz großer Reflektoren im Sommer Überhitzungen zuverlässiger vermieden werden. Die Reflektoren von Vakuumröhrenkollektoren können dann relativ zur Fluidführung (Vakuumröhre) größer vorgesehen werden. Dadurch sind die erfindungsgemäßen Sammler weiter=länger in die kalte Jahreszeit hinein und früher aus ihr heraus als herkömmliche Sammler wirksam. Die mittels Wärmespeichern zu überbrückende Zeit des Jahres (Winter) wird dadurch kürzer, so dass diese Speicher kleiner ausgelegt werden können oder bei gleicher Größe wegen längerer Beheizung im Herbst länger in die kalte Jahreszeit hinein Wärme abgeben und wegen früherer Beheizung im Frühjahr und höheren Temperaturen früher wieder aufnehmen können.

Ein paneelartiger Strahlungsenergiesammler (1) zum Sammeln von Strahlungsenergie einer Quelle, insbesondere der Sonne, hat eine strahlungsabsorbierende Fluidführung (3) und eine mit der strahlungsabsorbierenden Fluidführung (3) direkt oder indirekt verbundene Isolierschicht (11), die von der Quelle aus betrachtet hinter der Fluidführung (3) oder hinter einem der Fluidführung (3) zugeordneten Strahlungsreflektor (6) liegt und als Wärmedämmung eines den Strahlungsenergiesammler (1) tragenden Dach- oder Wandbereichs eines Gebäudes ausgelegt ist.

Die hinter dem Strahlungsenergiesammler (hinter dessen Reflektor) vorgesehene Isolierschicht kann entsprechend modernen Dachdämmungsbauweisen, insbesondere entsprechend ordnungspolitischen Vorgaben hierfür, etwa Dämmwert und ggf. anderer Vorgaben, ausgelegt sein. Auf diese Weise kann sie unmittelbar als regelungskonforme und/oder energetisch sinnvolle Dachisolierung dienen, so dass Dachisolierung und Strahlungsenergiesammler gemeinsam verbaut werden können und nicht redundant verbaut werden müssen.

Der Strahlungsenergiesammler kann zwischen Fluidführung (3) und Isolierschicht eine Wetterschutzschicht aufweisen, die flächig bzw. formschlüssig mit dem Material der Isolierschicht verbunden sein kann. Er kann einen ersten Reflektor aufweisen mit einem konkaven Bereich zum Reflektieren von Strahlung von der Quelle zur Fluidführung (3) zwischen Isolierschicht (11) und Fluidführung, wobei der Reflektor eine Oberfläche der Wetterschutzschicht sein kann und wobei das Material der Isolierschicht bzw. die Wetterschutzschicht flächig bzw. formschlüssig mit der Reflektorrückseite verbunden sein kann.

Der Strahlungsenergiesammler kann in der Isolierschicht eingebettete Fluidleitungen für Vorlauf und/oder Rücklauf des Fluids in der Fluidführung und/oder für die Reflektorbeheizung aufweisen. Innenseitig kann die Isolierschicht eine an eine Dachunterkonstruktion angepasste Formgebung und/oder Gestaltung aufweisen, insbesondere eine oder mehrere Aussparungen entsprechend Dachsparren und/oder anderer tragender Elemente.

Die Isolierschicht des Strahlungsenergiesammlers kann auf der Gebäudeinnenseite flach sein, abgesehen von ggf. vorhandenen Vertiefungen wie punktuellen Löcher, länglichen Nuten für die Aufnahme tragender Strukturen des Dachs. Die flache Innenseite der Isolierschicht kann mit einer weiteren Schicht bedeckt sein, die als zugängliche Innenoberfläche eines Raums (Dachraum, Wohnraum) dienen kann, etwa eine Gipskartonschicht geeigneter Dicke o. ä..

Die beschriebenen Strahlungsenergiesammler sind allgemein zum Verbau mit weiteren, insbesondere gleichartigen Strahlungsenergiesammlern ausgelegt und können Verbindungseinrichtungen zur mechanischen und/oder fluidischen und/oder elektrischen Verbindung mit einem weiteren Strahlungsenergiesammler aufweisen.

Nachfolgen werden Bezug nehmend auf die Zeichnungen Merkmale der Erfindung beschrieben. Es zeigen
Fig. 1 eine erste Ausführungsform der Erfindung in verschiedenen Ansichten.
Fig. 2 in Kombination mehrere weitere Merkmale der ersten Ausführungsform,
Fig. 3 Erläuterungen zur Wirkungsweise der Erfindung,
Fig. 4 weitere Merkmale der ersten Ausführungsform,
Fig. 5 eine weitere Ausführungsform,
Fig. 6 eine weitere Ausführungsform,
Fig. 7 eine weitere Ausführungsform,
Fig. 8 eine weitere Ausführungsform, und
Fig. 9 den Aufbau eines Vakuumröhrenkollektors,
Fig. 10 eine Skizze für Berechnungen, und
Fig. 11 eine Ausführung einer Steuerung bzw. Regelung.

In der nachfolgenden Beschreibung sind Merkmale als miteinander kombinierbar anzusehen, auch wenn deren Kombination miteinander nicht ausdrücklich angesprochen ist, soweit die Kombination nicht widersprüchlich bzw. technisch unmöglich ist. Allgemein bedeuten gleiche Bezugsziffern gleiche Komponenten in den unterschiedlichen Figuren.

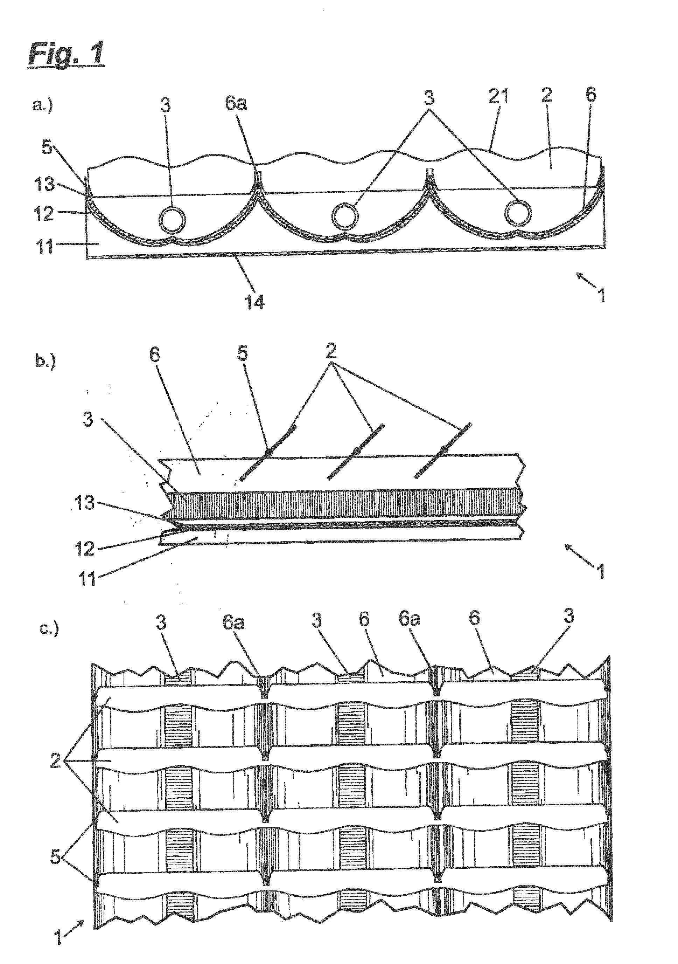

Fig. 1 zeigt in Draufsicht, Seitenansicht und als Schnitt in Kombination mehrere Merkmale bzw. Ausführungsformen der Erfindung. Fig. 1a zeigt einen Querschnitt durch einen Strahlungsenergiesammler. Es kann sich bei den Fluidführungen (wie schematisch angedeutet) um einen Vakuumröhren-Sammler handeln, aber auch um einen Flachbett-Sammler.

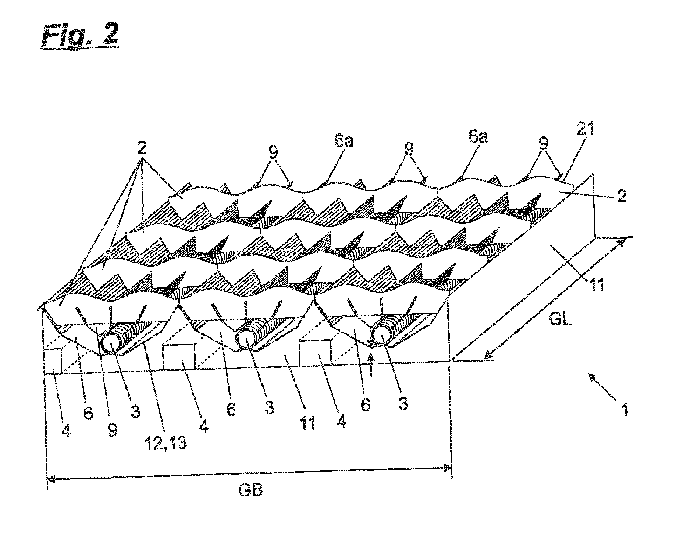

In der gezeigten Ausführungsform sind Fluidführungen 3 als Vakuumröhren oder ähnliche Systeme ausgelegt. Mehrere können physisch parallel angeordnet sein, wie gezeigt. Sie können in paralleler oder serieller Fluidverbindung miteinander stehen. Der gesamte Strahlungsenergiesammler 1 kann paneelartig aufgebaut sein. Das Paneel kann geradlinig, insbesondere rechtwinklig begrenzt sein und eine Gesamtbreite GB senkrecht zur Fluidführung > 0,5 m oder > 1 m aufweisen (siehe Figur 2). Die Gesamtlänge GL (parallel zur Fluidführung, siehe Figur 2) kann > 1 m oder > 2 m oder > 5 m oder > 12 m sein. Die Fluidführung 3 kann mehr oder minder einstückig aufgebaut sein, indem eine Leitung innen das Wärmetransportfluid führt und außen absorbierend (dunkel, schwarz) ausgebildet ist, oder sie kann komplexer aufgebaut sein, imdem Absorber einerseits und Fluidleitung andererseits separat gebaut, aber thermisch miteinander gekoppelt sind. Das Fluid kann eine Flüssigkeit oder ein Gas sein oder aufweisen. Eine Flüssigkeit kann ein Öl oder Wasser sein bzw. aufweisen und ggf. mit Zusätzen (Frostschutz, Korrosionsschutz, ...) versehen sein.

Im Strahlungsweg vor der Fluidführung 3 sind eine oder mehrere Lamellen 2 vorgesehen. Wenigstens einige oder alle der Lamellen können gleichartig zueinander ausgebildet sein. Sie können einem regelmäßigen Muster folgend angebracht sein, etwa parallel zueinander mit einem geeignet gewählten Abstand voneinander. Figur 1b zeigt drei der Lamellen 2, die quer zur strahlungsabsorbierenden Fluidführung 3 verlaufen. Schematisch angedeutet sind Anbringungsvorrichtungen 5, mit denen die Lamellen in geeigneter Weise mit dem Strahlungsenergiesammler verbunden sind. Sie können beispielsweise am Reflektor 6 oder darunterliegenden Strukturen befestigt sein, oder sie können einen eigenen (nicht gezeigten) Tragerahmen aufweisen, der an geeigneter Stelle mit dem Strahlungsenergiesammler 1 (Paneel) verbunden ist.

Figur 2 zeigt perspektivisch einen größeren Ausschnitt aus einem Paneel eines Strahlungsenergiesammlers 1. Man erkennt mehrere parallel verlaufende Lamellen 2 und rechtwinklig dazu mehrere Fluidführungen 3, die, wie schon gesagt, Vakuumröhrenkollektoren sein können. Jeweils zugeordnet sind rinnenförmige Reflektoren 6, die, wie in Fig. 2 gezeigt, geradflächig facettiert sein können, oder die, wie in Fig. 1 qualitativ gezeigt, verrundet (z.B. kreissegmentförmig oder parabelförmig oder evolventenförmig) ausgebildet sein können. In der Symmetrieebene kann ein konvexer Knick gebildet sein. Eine Lamelle 2 kann über mehrere parallel laufende Fluidführungen 3 hinweg reichend einstückig ausgebildet sein.

Das ganze Paneel bzw. der Strahlungsenergiesammler 1 kann einen Träger 4 aufweisen. Es kann sich beim Träger 4 um steife Schienen oder um einen stabilen Rahmen steifer Schienen (bspw. Aluminium-Profile oder verzinkte Eisenprofile oder Kunststoffmaterialien wie GfK) oder um eine Gitterstruktur handeln oder um ein flächiges Gebilde (Platte) oder auch um eine steife/ausgehärtete Wärmeisolierung (z. B. Schaum, PU-Schaum), was noch weiter beschrieben wird, oder um eine Kombination aus einer oder mehreren der genannten Elemente. An Träger 4 sind die genannten Komponenten direkt oder indirekt befestigt. Der Träger 4 kann auf der Rückseite des Reflektorblechs liegen und geeignet mit diesem verbunden sein.

Fig. 2 zeigt auch mehrere zweite Reflektoren 9, die zusätzlich zu den ersten Reflektoren 6 vorgesehen sein können. Die zweiten Reflektoren können sich in geeigneter Weise im Lichtweg vor der strahlungsabsorbierenden Fluidführung 3 bzw. vor dem ersten Reflektor 6 befinden. Sie können sich parallel zur Fluidführung 3 erstrecken und eine Kombination aus Strahlungsführungen hin zur Fluidführung 3 und ggf. gewünschten Abschattungen derselben bilden. Sie können eine konkave reflektierende Oberfläche aufweisen. Zwei oder mehrere solcher zweiter Reflektoren können einer Fluidführung 3 zugeordnet sein. Sie können symmetrisch angeordnet sein.

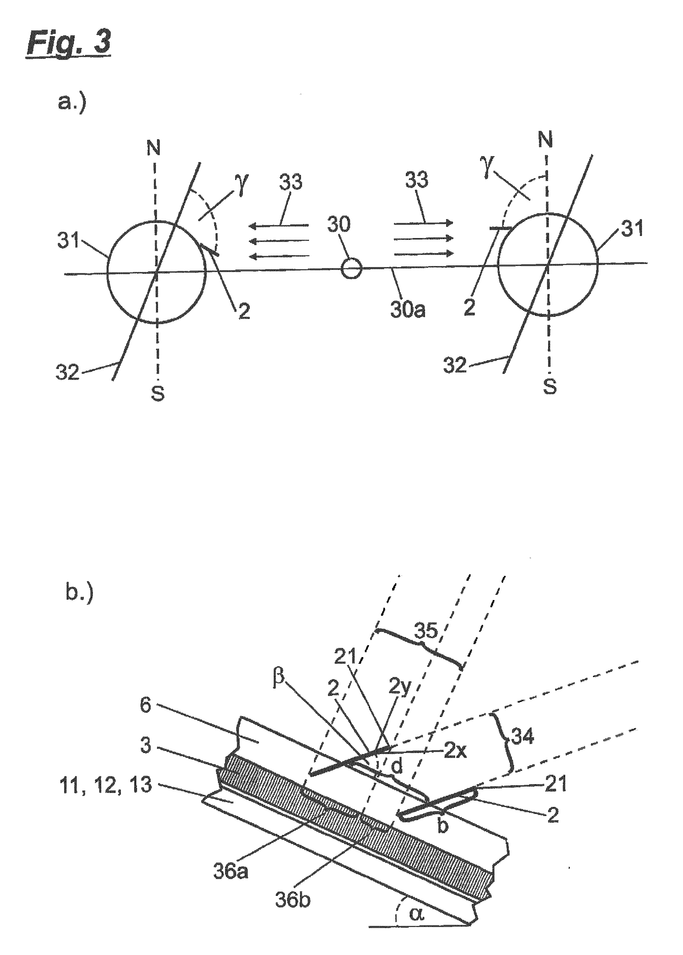

Anhand der Figuren 3a und 3b wird der Abschattungswirkmechanismus der Lamellen 2 beschrieben. Fig. 3a zeigt eine Skizze zur Erläuterung der jahreszeitlichen Unterschiede des Sonnenstands. 30 symbolisiert die Sonne, 30a in Seitenansicht die Ekliptikebene, die als senkrecht auf der Zeichnungsebene stehend angenommen wird. Schematisch geschnitten ist die Erde 31 dargestellt, wobei 32 die Achse der Erdrotation symbolisiert und der Nordpol oben und der Südpol unten liegend angenommen werden. 33 symbolisiert die einfallende Strahlung. Die Erdachse steht nicht rechtwinklig auf der Ekliptikebene 30a, sondern ist gegen die Normale um einen Winkel ε von etwa 23,4° (genau 23,4385°) geneigt. Rechts ist die Situation im Winter angenommen, links im Sommer.

Da wegen der Erddrehung die Erdachse konstant ausgerichtet im Raum steht, ist die Nordhalbkugel im Winter (Fig. 3a rechts) um gut 23° von der Sonne 30 weg geneigt, während sie im Sommer (Fig. 3a linke Hälfte) um gut 23° auf sie zu geneigt ist. Dies bewirkt die bekannten um fast 47° unterschiedlichen Sonnenstände sommers und winters. Die unterschiedlichen Sonnenstände können zu einer gezielten Abschattung genützt werden, wie dies anhand von Fig. 3b erläutert wird. Dort zeigt 34 ein Bündel einfallender Strahlen im Winter (niedriger Sonnenstand), während 35 ein Bündel einfallender Strahlen im Sommer (hoher Sonnenstand) zeigt. Angenommen sind jeweils Umstände mittags. Es sei insoweit darauf hingewiesen, dass sich der Sonnenstand relativ zu den Lamellen nicht nur jahreszeitenabhängig ändert, sondern auch tageszeitenabhängig. Eine Abschattung von praktisch 0 wird deshalb auch iunnerhalb eines Tages nur kurzzeitig erreichbar sein.

Im Strahlengang vor der strahlungsabsorbierenden Fluidführung 3 sind je eine Lamelle 2 in festem Winkel γ gegenüber der Erdachse gezeigt. In der gezeigten Ausführungsform sind sie so ausgerichtet, dass sie winters (beispielsweise Wintersonnenwende am 21. Dezember) mittags parallel zu den einfallenden Strahlen 34 ausgerichtet sind. Dann ist ihre schattenspendende Wirkung minimal und das einfallende Licht gelangt näherungsweise vollständig zu der die Strahlung absorbierenden Fluidführung 3. Bei unverändertem Anstellungsgrad der Lamellen 2 bewirken sie dagegen sommers (Strahlenbündel 35), gezeigt etwa für Sommersonnenwende am 21. Juni, eine merkliche Abschattung etwa entsprechend Bereich 36a, während im Bereich 36b Strahlung noch zur Fluidführung 3 gelangt.

Das Verhältnis von maximal abgeschattetem Bereich 36a zu Durchlassbereich 36b hängt von verschiedenen geometrischen Größen ab, etwa der Breite b der Lamellen 2, dem Abstand d der Lamellen voneinander, dem Anstellungsgrad α des Strahlungsenergiesammlers (oft entsprechend Dachneigungswinkel) und ähnlichem. Im Hinblick auf den gewünschten Effekt können diese einzelnen Parameter so gewählt werden, dass im Sommer eine bestimmte stärkere relative Abschattung des Strahlungsenergiesammlers als im Winter erreicht wird. Dadurch wird im Sommer die einfallende Wärmeleistung reduziert, sodass Überhitzungen vermieden werden.

In einem einfachen Fall mit Lamellen konstanter Breite b und konstantem Abstand d der Lamellen hängen zu einem bestimmten Zeitpunkt die Werte von Dachneigung α, Sonnenhöhe über dem Horizont (datums- und uhrzeitabhängig, auch abhängig von geographischer Breite des Verbauorts), Anstellwinkel β der Lamellen gegenüber dem Paneel, Lamellenbreite b und Schattenbreite auf dem Paneel über die allgemeinen trigonometrischen Beziehungen (Sinussatz, Cosinussatz) voneinander ab. Aus den sich so ergebenden Werten können Dimensionierungen (Fläche der Lamellen, Breite b der Lamellen, Anstellwinkel der Lamellen in Seitenansicht, Ausrichtung in Draufsicht) vorgenommen werden, um einerseits (insbesondere mittels des Anstellwinkels der Lamellen) die gewünschte Optimierung der Strahlungsenergiesammlung in der kalten Jahreszeit und andererseits (insbesondere mittels Breite, Fläche der Lamellen) die zur Vermeidung von Überhitzungen in der warmen Jahreszeit nötige Abschattung zu erhalten.

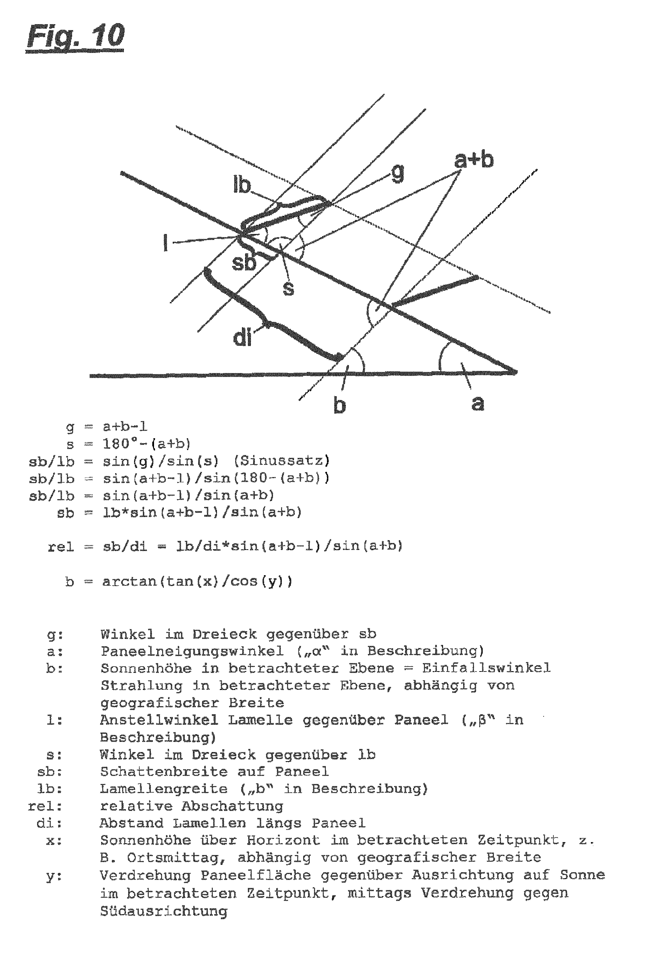

Figur 10 zeigt beispielhaft eine Berechnung der relativen Abschattung rel. Sie zeigt schematisch die Verhältnisse in einer Ebene, die auf der Paneelebene senkrecht steht. Die Sonne wird meistens außerhalb dieser Ebene stehen. Wenn eine oder mehrere der Eingangsgrößen nicht konstant sind, sind die Verhältnisse nicht mehr mit einer geschlossenen Formel darstellbar. Zur Ermittlung gewünschter Größen können dann z. B. Simulationen gefahren werden.

Es sei darauf hingewiesen, dass der Effekt variabler Abschattung bei feststehenden Lamellen 2 eintritt. Die Lamellen müssen nach Verbau nicht verschieblich, verschwenkbar oder nachführbar sein. Sie können aber so ausgebildet sein. Die Dimensionierung kann dann insgesamt so sein, dass im Winter die gesammelte Wärme für Raumheizung und Warmwasserbereitung ausreicht oder jedenfalls merklich hierzu beiträgt. Für den Sommer kann die Auslegung so sein, dass die Abschattung so ist, dass nur die Warmwasserbereitung erfolgt oder dass die gesammelte Energie ausreicht, um Warmwasser zu bereiten und einen Wärmespeicher zu beheizen, aber jedenfalls so, dass Überhitzung vermieden wird.

Die Lamellen 2 können feststehen oder einstellbar sein. Etwa können sie in ihrem Anstellungswinkel β gegenüber der Paneelfläche einstellbar sein. Die Einstellbarkeit kann mechanisch angetrieben oder elektrisch angetrieben sein. Sie kann einmalig oder mehrfach einstellbar ausgelegt sein. Sie kann manuell oder automatisch erfolgen. Sie kann kontinuierlich oder schrittweise erfolgen.

Beispielsweise kann die Befestigungseinrichtung 5 eine Drehachse aufweisen bzw. bilden, die parallel zur Lamelle laufen kann und um die herum die Lamellen 2 geschwenkt werden können. Auf diese Weise können sie im Winter eine gewisse Zeit dem veränderlichen Sonnenstand nachgeführt werden, sodass über einen längeren Zeitraum hinweg die Abschattung praktisch Null ist. Die Drehachse kann aber auch zur nur einmaligen Einstellung der Lamellen nach ihrem Verbau dienen.

Die gewünschte Dimensionierung zur Einstellung der gewünschten Abschattung kann durch einen oder mehrere der Parameter Abstand d, Breite b, Anstellwinkel β gegenüber dem Paneel erfolgen. Es sei darauf hingewiesen, dass der Anstellwinkel β relativ zur Fläche des Paneels auch vom Verbauort und der Verbauausrichtung abhängt. Deutschland betrachtend liegt Garmisch-Partenkirchen etwa auf 47,5° nördlicher Breite, während Flensburg auf etwa 54,75° nördlicher Breite liegt. Die Standorte unterscheiden sich um mehr als 7° und dementsprechend unterscheiden sich auch die Sonnenstände.

Die Einbaugegebenheiten hängen aber auch von der Dachneigung ab, die häufig dem Neigungswinkel α des Strahlungsenergiesammlers entspricht, und von der Ausrichtung des Dachs in Draufsicht. Da relativ viele Faktoren eine optimale Auslegung bestimmen, kann es wünschenswert sein, die Lamellen 2 mindestens einmal während des Verbaus einstellbar zu machen. Denn es ist kaum möglich, für alle möglichen Einbaugegebenheiten vorgefertigt sinnvolle Dimensionierungen vorzuhalten.

Die Anordnung/Ausrichtung der Lamellen in Draufsicht auf die Dachfläche kann so gewählt bzw. eingestellt oder einstellbar sein, dass die Lamellen quer zur Falllinie des Dachs laufen oder parallel dazu oder unter einem Winkel zwischen 0° und 90°. Die Anordnung kann so sein, dass sie zur Wintersonnenwende oder an einem anderen kalten Referenztag über den Tag integriert eine minimale oder minimal wirksame Abschattung des Reflektors 6 bzw. der Fluidführung 3 liefern, wobei Abweichungen von höchstens ±10° oder höchstens ±5° oder höchstens ±3° zugelassen werden. Die Ausrichtung kann auch so sein, dass die Lamellen im verbauten Zustand des Strahlungsenergiesammlers 1 an einem 21. Dezember vorzugsweise zum Sonnenhöchststand am Verbauort um höchstens ±5° oder höchstens ±3° gegen die einfallende Strahlung geneigt sind.

Fig. 2 zeigt eine Ausführungsform, bei der die Lamellen 2 eine Oberkante 21 haben, die nach Maßgabe untechnischer Gesichtspunkte, insbesondere nach Maßgabe ästhetischer Gesichtspunkte, gestaltet ist. Gezeigt ist als Beispiel eine wellenartige Profilierung, die aus der Ferne bzw. von schräg unten betrachtet eine dachziegelartige Anmutung liefert. Auf diese Weise können die Lamellen 2 dazu beitragen, dem technischen Produkt der Strahlungsenergiesammlerpaneele 1 ein relativ konventionelles Aussehen zu verleihen.

Die Oberkante 21 kann aber auch technisch motiviert gestaltet sein. Sie kann eine oder mehrere Vorsprünge 42 aufweisen, die ähnlich dem Schatten eines Turms auf einem Platz im Lauf des Tages über die Absorber- bzw. Reflektorfläche wandern und so über unterschiedlich wirksame Flächenbereiche des Absorbers bzw. Reflektors laufen können, so dass die Abschattung über den Tag unterschiedlich wirksam ist. Die Gestaltung kann so gewählt werden, dass sie der unterschiedlichen Wirksamkeit des Wärmesammlers aufgrund des veränderlichen Sonnenstandes entgegen läuft, so dass auf diese Weise auch ein ausgleichender Effekt gewonnen ist, der insbesondere in der heißen Jahreszeit mittags Überhitzungen entgegenwirkt. Die Auslegung kann so sein, dass zum Sonnenhöchststand der Schatten des Vorsprungs die Absorberfläche maximal möglich überdeckt.

Eine Gestaltung der Oberkante der Lamelle kann auch so sein, dass zwei Vorsprünge pro Reflektoröffnung vorgesehen sind. Die Einstellung beim Verbau erfolgt so, dass die Schatten der Vorsprünge zum Sonnenhöchststand beidseits der Absorberröhre liegen. Dann wird zum Sonnenhöchststand das exzessive Zuführen von Strahlungsenergie durch die breite Reflektoröffnung hin zu den seitlichen Bereichen des Absorbers vermieden.

Abhängig von der Ausrichtung des Kollektors können die zwei Flanken eines Vorsprungs unsymmetrisch zueinander ausgebildet sein. Auch können die zwei Vorsprünge unsymmetrisch zueinander und/oder nicht deckungsgleich zueinander ausgebildet sein.

Die Befestigungseinrichtung der Lamellen am Strahlungssammler kann so gestaltet sein, dass mindestens einmalig beim ersten Verbau der Lamellen diese in Längsrichtung der Lamelle betrachtet beliebig oder fein gestuft verschoben angebracht werden können, um auf diese Weise eine gewünschte Lage des Schattens des/r Vorsprungs/e relativ zu den Wärmesammlerstrukturen wie oben beschrieben einstellen zu können.

Statt der Oberkante kann auch die Unterkante unter technischen Aspekten wie beschrieben gestaltet sein. Die Oberkante kann dann ästhetisch gestaltet sein.

Das Höhenverhältnis hv = bmax/bmin von maximaler Breite bmax ("Länge" des Vorsprungs) zu minimaler Breite bmin der Lamelle - wobei die Differenz bmaxbmin der Länge des Vorsprungs entspricht - kann größer als 1.2 oder größer als 1.5 oder größer als 2 sein. Bei quer zu Fluidführungen laufenden Lamellen können pro Fluidführung ein, zwei oder mehrere Vorsprünge vorgesehen sein. Ihre Position kann so gewählt werden, dass sie zum Sonnenhöchststand besonders wirksame Teile des Gesamtarrangements größtmöglich abschatten. In der Regel sind das die unmittelbaren Absorberflächen. Bei Südausrichtung einer Dachfläche können die Vorsprünge um die Symmetrieebene eines Reflektors zentriert liegen. Die Breite eines Vorsprungs (in Längsrichtung der Lamelle) kann im Bereich der Breite der Absorberfläche entsprechend dem Durchmesser Qa des Absorbers liegen, max. ±80% oder ±50% des Wertes.

Die Farbgebung der Lamellen 2 kann geeignet gewählt werden. Sie kann beispielsweise so sein, dass die Unterseite 2x der Lamellen 2, die von Personen wahrnehmbar ist, in einer gewünschten Farbe erscheint, etwa ziegelrot, während die Oberseite 2y strahlungsabsorbierend ausgebildet ist, z. B. dunkel bis schwarz, sodass die Strahlung, die sommers abgeschattet werden soll, nicht durch Reflektionen doch wieder zum Strahlungsenergiesammler gelangt. Allgemein ausgedrückt können die beiden Seiten 2x, 2y der Lamelle 2 unterschiedlich gefärbt sein.

Die Lamellen 2 können aus einem homogenen oder zusammengesetzten Material gebaut sein. Es kann sich um einen Kunststoff handeln oder um Metall, beispielsweise Aluminium, ggf. eingefärbt/lackiert. Die Lamellen 2 können selbsttragend ausgebildet sein, also so, dass sie keiner weiteren Tragestruktur (etwa eines Rahmens) bedürfen. Sie können plan ausgebildet sein. Sie sind so stabil auszubilden, dass sie Witterungseinflüssen (Windlast, Schneelast) widerstehen können. Die Lamellen 2 können als Halterung für die zweiten Reflektoren 9 dienen.

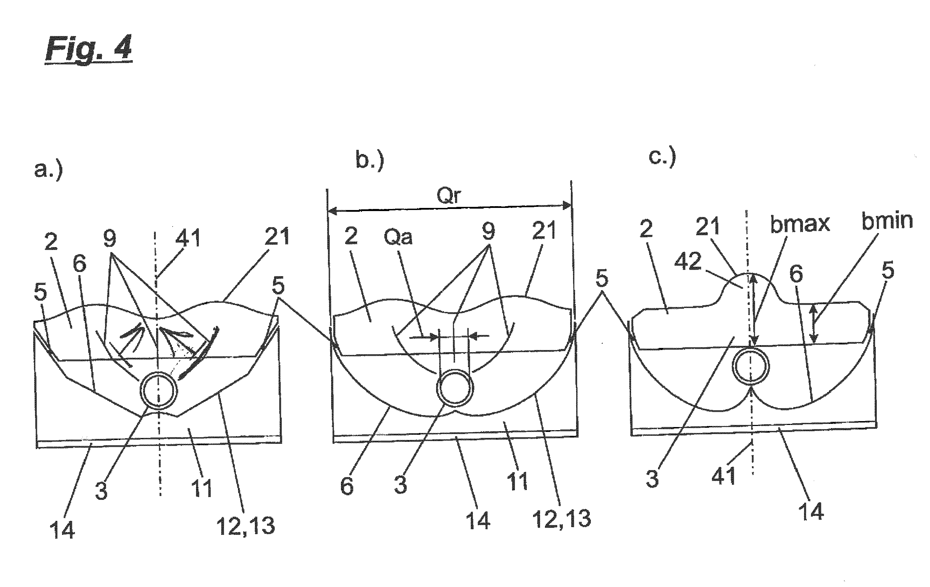

Figur 4 zeigt verschiedene Ausführungsformen von ersten und zweiten Reflektoren. Während Fig. 1a für jede Fluidführung 3 einen stetigen konkaven, beispielsweise parabolischen Reflektor 6 zeigt, zeigen die Ausführungsformen der Fig. 4 Reflektoren mit einem konvexen Bereich in der Symmetrieebene bezüglich der Querrichtung (quer zur Fluidführung 3). Links und rechts davon ist der Reflektor jeweils konkav. In Fig. 4a ist er facettiert aus ebenen Flächen bzw. aus gegeneinander abgewinkelten Flächen gebildet, während in den Figuren 4b die beiden Reflektorhälften kontinuierlich verrundet ausgebildet sind.

In den gezeigten Ausführungsformen sind die Lamellen 2 schneidend zur Fluidführung 3 angeordnet, insbesondere rechtwinklig hierzu. In vertikaler Richtung ragen sie in die konkave Öffnung des Reflektors 6 hinein. Sie können ggf. zum größeren Teil in der Öffnung des konkaven Reflektors liegen.

Nicht gezeigt bzw. nur schematisch angedeutet sind Befestigungseinrichtungen 5, mit denen die Lamellen 2 untereinander befestigt sind, oder mit denen sie am Strahlungsenergiesammler, insbesondere seinem Reflektor 6 oder anderen Strukturen, etwa dem Träger 4, befestigt sind. Es ist auch möglich, die Lamellen 2 an der Fluidführung 3 durch geeignete Einrichtungen zu befestigen, etwa durch Klipse, die einen Teilumfang der strahlungsabsorbierenden Fluidführung 3, z. B. der Vakuumröhre, flexibel umgreifen.

Die Figuren 4a und 4b zeigen auch die zweiten Reflektoren 9. Sie sind zur ggf. vorhandenen Symmetrieebene 41 hin symmetrisch angeordnet und sich zu ihr hin öffnend bzw. nach außen öffnend/konkav geformt. Auch sie können facettiert eckig (Fig. 4a) oder verrundet (Fig. 4b, 4c) ausgebildet sein. Es kann ein zweiter Reflektor auch direkt in der Symmetrieebene liegend (vertikal angeordnet) vorgesehen sein. Die verrundeten Reflektorformen kreissegmentförmig oder parabelförmig oder evolventenförmig und symmetrische zur Symmetrieebene 41 ausgebildet sein.

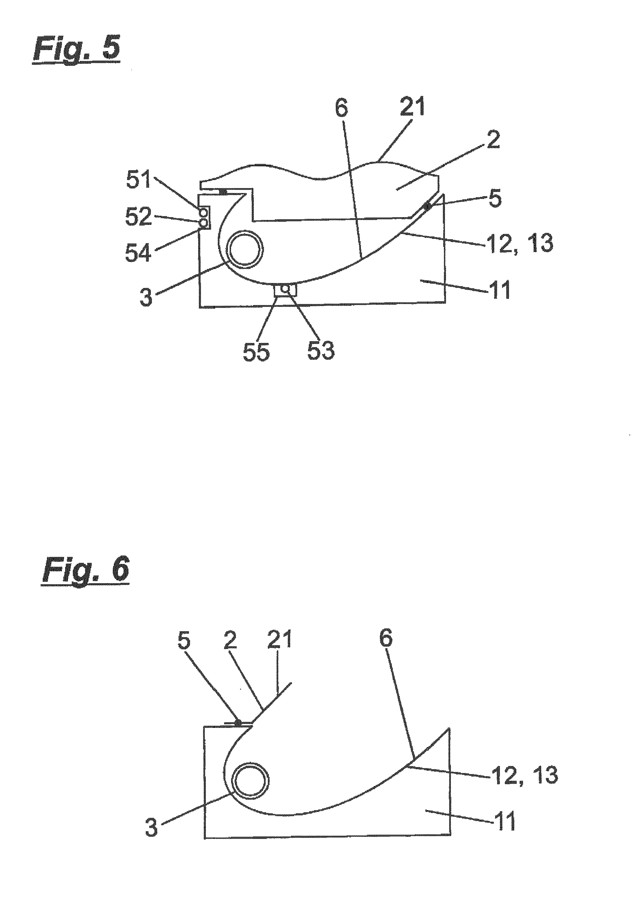

Die Ausführungsformen der Figuren 1, 2, 4 und 5 sind für die Montage der länglichen Fluidführungen 3 in der Falllinie eines Dachs ausgelegt. Fig. 5 zeigt eine modifizierte Anordnung, die für Dächer in Ost-West-Ausrichtung verwendet werden kann. Der Reflektor 6 ist asymmetrisch. Er kann parabolisch, evolventenförmig oder allgemein verrundet, aber auch facettiert ausgebildet sein. Auch die Anordnung der absorbierenden Fluidführung 3 im Reflektor 6 ist asymmetrisch.

Auch in dieser Ausführungsform können Lamellen 2 vorgesehen sein, deren eine im Schnitt der Fig. 5 gezeigt ist. Es können auch in der Fig. 5 die Lamellen 2 mehrfach wiederholt vorgesehen sein, wie in den Figuren 1, 2 und 4 gezeigt. Auch hier können sie in die Öffnung des konkaven Reflektors 6 hineinragen.

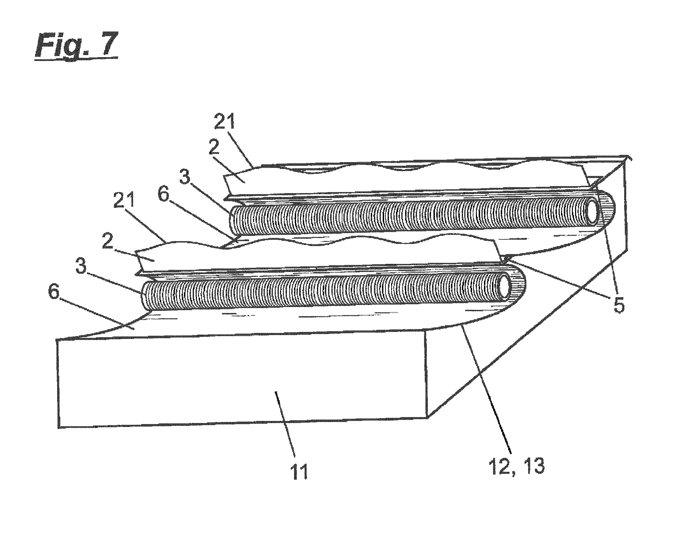

Die Figuren 6 und 7 zeigen Ausführungsformen, bei denen die Lamellen 2 nicht schneidend/senkrecht zur Fluidführung 3 angeordnet ist/sind, sondern parallel dazu, etwa an einer Kante des Reflektors 6 parallel zu ihr laufend angebracht. Bei dieser Bauart können die Fluidführung 3 im verbauten Zustand quer zur Falllinie eines Dachs, also horizontal, angeordnet sein. Auch bei einer solchen Anbringung werden mit höher steigendem Sonnenstand im Verlauf des Jahres die Abschattungen wie gewünscht vergrößert erzielt, wenn die Lamelle geeignet ausgerichtet ist. Diese Bauarten können, wie die der Figuren 1, 2 und 4, auch für Dächer in Südausrichtung verwendet werden.

Die Dimensionierungen der Lamellen 2 und ihre Anordnung können so sein, dass an einem warmen Referenztag und ggf. Referenzzeitpunkt mindestens 30% oder mindestens 50% oder mindestens 70% des Reflektors 6 und/oder der Fluidführung 3 abgeschattet sind bzw. die einfallende Strahlungsenergie gegenüber dem Höchstwert verringert ist. Der Referenzzeitpunkt kann Ortsmittag (Sonnenhöchststand am warmen Referenztag) sein oder 12:00 oder 13:00 oder 14:00 Ortszeit. Der warme Referenztag kann die Sommersonnenwende 21. Juni sein oder der statistisch wärmste Tag des Jahres (etwa im Juli oder August). Es kann aber auch ein anderer Tag in der warmen Jahreszeit (insbesondere im Juni, Juli oder August) sein, zu dem realistischerweise Überhitzungen oder Probleme in der Wärmeabfuhr erwartet werden müssen, z. B. 1., 15. oder 30. Juni oder 15. oder 30. Juli).

Die Obergrenze der maximalen Abschattung im Sommer kann 90% oder 70% oder 50% betragen. Wenn aufgrund großer Reflektoren lokale Überhitzungen am Sammler befürchtet werden, kann die Auslegung auch so sein, dass zeitweise auch mindestens 80%, 90% oder 100% der einfallenden Strahlungsenergie abgeschattet werden (etwa 1. Juni bis 10. Juli Ortsmittag ±1 Stunde).

Andererseits kann die Dimensionierung und Anbringung/Ausrichtung so sein, dass die Abschattung bzw. Minderung der einfallenden Strahlungsleistung an einem sinnvollen kalten Referenztag minimal ist. Der kalte Referenztag kann die Wintersonnenwende 21. Dezember sein oder der statistisch kälteste Tag des Jahres (etwa im Januar). Es kann aber auch ein anderer Tag in der kalten Jahreszeit (Oktober, November, Dezember, Januar Februar, März) sein, zu dem realistischerweise gerade noch bzw. eben schon nennenswerte Strahlungsenergiesammlung erwartet werden kann, z. B. 1., 15. oder 30. Oktober oder 15. November). Warmer und kalter Referenztag können anhand von Wetterstatistiken zum Verbauort oder zur Verbauregion gewählt sein. Wenn dann später in der kalten Jahreszeit die Abschattung wieder steigt, kann dies egal sein, da wegen der äußeren Umstände (geringe einfallende Leistung, kalte Außentemperatur, schlechtes Wetter) sowieso keine nennenswerten Energiemengen gesammelt werden können, so dass die Abschattung unschädlich ist.

Die Abschattung/Strahlungsminderung insbesondere am kalten Referenztag kann zu einem bestimmten Zeitpunkt (z. B. Ortsmittag) oder über den Tag integriert betrachtet werden, wobei hier auch lokale Gegebenheiten (wie etwa Abschattungen durch benachbarte Gebäude, Bäume oder Berge) berücksichtigt werden können.

Die Auslegung/Anbringung/Ausrichtung der Lamellen kann also im Hinblick auf die folgenden Parameter erfolgen:
- geographische Breite des Verbauorts,
- Dachneigung,
- Dach- oder Wandausrichtung,
- lokale Gegebenheiten wie etwa schon vorhandene Abschattungen,
- Wetter- bzw. Sonnenscheinstatistik,
- Optimierungsstrategien der Strahlungssammlung.

Aus diesen und ggf. weiteren Parametern ergeben sich zuletzt die Bauparameter, insbesondere Größe/Fläche/Breite der Lamellen 2 und ein wünschenswerter Anstellwinkel β der Lamellen 2 gegen das Paneel. Die Befestigungseinrichtung 5 ist so gebaut, dass dieser Winkel mit den genannten Toleranzen eingestellt oder bei Montage mindestens einmalig einstellbar ist.

Strahlungsenergiesammler 1 mit den beschriebenen Lamellen 2 können einen relativ großen, der absorbierenden Fluidführung 3 zugeordneten Reflektor 6 aufweisen. Das Verhältnis von Reflektorquerabmessung Qr zu Durchmesser bzw. Querabmessung der absorbierenden Fläche Qa (7 in Figur 9, siehe auch

Figur 4b) der Fluidführung 3 (Vakuumröhre) kann größer als einer der Werte 3, 4, 5 oder 8 sein. Eine vorteilhafte Dimensionierung ist es, wenn der Durchmesser der Fluidführung 3 (insbesondere Vakuumröhrenkollektor) im Bereich von 10% - 40% oder im Bereich von 15% bis 25% der Breite der Öffnung des Reflektors 6 liegt.

Fig. 7 zeigt einen Ausschnitt aus einem Paneel, bei dem mehrere der Strukturen der Fig. 6 parallel vorgesehen sind. Die Lamellen 2 sind mit geeigneten Befestigungsvorrichtungen 5 parallel zu den absorbierenden Fluidführungen 3 an oder in der Nähe einer Kante des jeweils zugeordneten Reflektors 6 angebracht. Die Oberkante 21 der Lamellen 2 ist unter ästhetischen Gesichtspunkten gestaltet (Dachziegelanmutung).

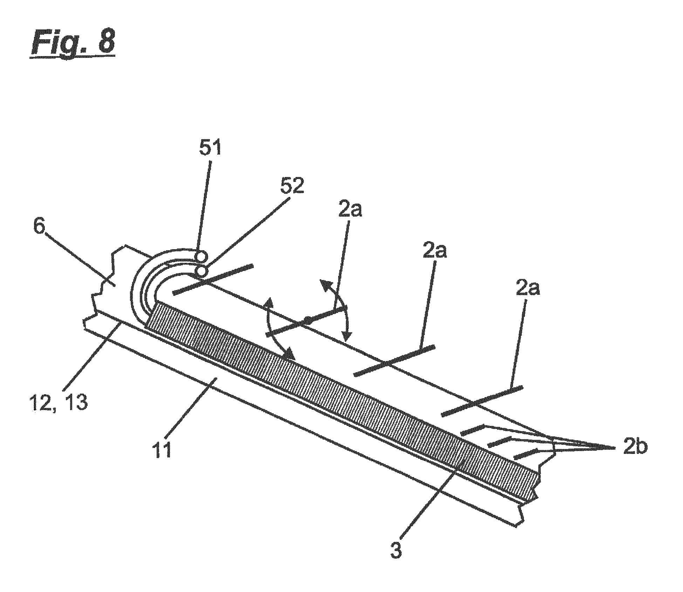

Fig. 8 zeigt eine Ausführungsform mit Lamellen 2 unterschiedlicher Größe. 2a bezeichnet Lamellen großer Breite (b in Fig. 3b), während 2b Lamellen kleiner Breite bezeichnet. Abhängig von der Breite der Lamellen können auch ihre Abstände variieren.

51 und 52 bezeichnen Fluidzulauf und Fluidablauf der Fluidführung 3, also Leitungen, die das den Wärmetransport bewirkende Fluid der Fluidführung 3 zuführen und von ihr wieder abführen. Im Wärmesammelbetrieb ist die Temperatur des Fluids im Ablauf 52 höher als die Temperatur des Fluids im Zulauf 51. Wie schon gesagt, kann die Fluidführung 3 Teil eines Vakuumröhrenabsorber sein, der mit Zulauf 51 und Ablauf 52 oder mit anderen gleichartigen Fluidführungen 3 verbunden ist.

Die Gestaltung der Anbringung der Lamellen am Strahlungssammler kann so sein, dass beim ersten Verbau Positionen und/oder Ausrichtungen der Lamellen relativ zueinander und/oder relativ zum Strahlungsenergiesammler einstellbar sind. Die Einstellung kann abhängig von Verbaugegebenheiten wie Dachneigung, Dachausrichtung, geographische Breite und ähnliches erfolgen. Die Befestigung kann so sein, dass nach dem ersten Verbau die Lamellen passiv sind, also festliegen und nicht mehr bzw. nur noch durch Arbeiten wie beim ersten Verbau einstellbar sind. Eine derart passive Ausführungsform der Lamellen hat den Vorteil, dass keine dauerhaft variablen Befestigungen der Lamellen und Antriebsmechanismen hierfür vorgesehen sein müssen.

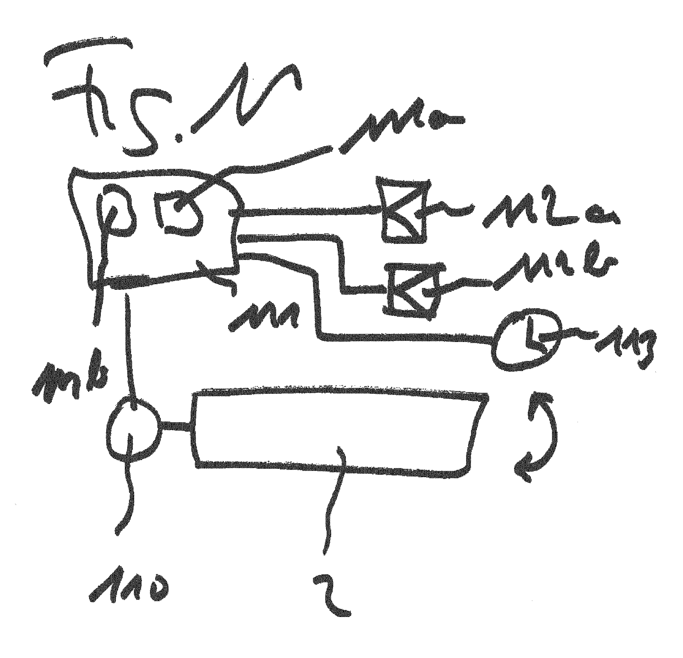

Wie aber auch schon erwähnt können eine, mehrere oder alle Lamellen 2 dauerhaft bzw. wiederholt automatisch einstellbar sein, etwa in ihrer Winkellage gegenüber der Paneelfläche. Die Einstellung kann gesteuert oder geregelt erfolgen. Figur 11 zeigt hierzu schematisch mögliche Merkmale.

110 symbolisiert einen Antrieb für die Lamellen. Er kann einen Elektromotor und ggf. einen Treiber hierfür aufweisen und über geeignete Gestänge und/oder Getriebe eine oder mehrere Lamellen 2 reversibel insbesondere innerhalb eines bestimmten Winkelbereichs einstellen. Gegenstand der Einstellung kann der Winkel β bzw. die Größe l in Figur 10 sein. Der Motor 110 kann ein Schrittmotor ggf. mit (nicht gezeigter) rückgeführter Positionssensorik sein. Die Lamellen 2 können um eine Drehachse herum drehbar sein, die in der Befestigungseinrichtung 5 implementiert sein kann.

111 symbolisiert einen Steuerungs- bzw. Regelungsrechner. Eingangsseitig kann er ggf. Signale von einem oder mehreren Sensoren 112a, b (etwa Einlass- und/oder Auslasstemperatursensor am Sammler, Temperatursensor am Wärmereservoir und/oder Umgebungstemperatursensor und/oder Strahlungssensor, ggf. Positionssesnorik des Lamellenantriebs 110) empfangen. Er kann auch einen Zeit- und/oder Datumsgeber 113 aufweisen oder eingangsseitig damit verbunden sein. Nach Maßgabe der Eingangssignale und gespeicherter Steuerungs- bzw. Regelungsstrategien 111a, 111b und gespeicherter Daten erzeugt er Ausgangssignale für den Antrieb 110 der Lamelle(n) 2.

Im Rechner 111 können - in Form von Software und/oder Firmware und/oder Hardware (ASIC) - eine oder mehrere Steuerungs- bzw. Regelungsstrategien 111a, 111b hinterlegt sein, die jeweils Ein- und Ausgangssignale wie genannt empfangen und erzeugen. Wenn mehrere Strategien hinterlegt sind, kann zwischen ihnen umgeschaltet werden, etwa nach Maßgabe eines Zeit- oder Datumsgebers. Sie können aber auch überlagert/unterlagert verwendet werden.

Eine Regelungsstrategie 111a kann für den "heißen Bereich" der Periode (Sommersonnwende, Juli, definiert z. B. durch geeignete Anfangs- und Enddaten) ausgelegt sein und dann gewählt werden. Regelungsziel ist die Vermeidung von Überhitzungen. Ein Aspekt kann sein, dass zeitabhängig zu bestimmten Tageszeiten, etwa um Ortsmittag, die Abschattung besonders groß gewählt und die Lamellen in ihrer Winkellage entsprechend eingestellt werden, z. B. auf große oder vollständige Abschattung. Davor und danach werden kleinere Abschattungen eingestellt, um Wärme sammeln zu können.

Eine andere Regelungsstrategie 111b kann für den "kalten Bereich" der Periode (Wintersonnwende, Dezember, Januar, definiert z. B. durch geeignete Anfangs- und Enddaten) ausgelegt sein und dann gewählt werden. Regelungsziel kann die Maximierung von Strahlungssammlung und/oder die Vermeidung von Vereisung sein. Ein Aspekt kann sein, dass in Echtzeit bzw. kontinuierlich oder quasi-kontinuierlich (etwa alle 5 Minuten) die Lamellen dem Sonnenstand nachgeführt werden, um die Abschattung minimal und die Strahlungssammlung dadurch maximal zu halten und/oder Vereisung zu vermeiden oder zu reduzieren.

Auch weitere Regelungsstrategien können vorgesehen sein.

Lamellen 2 wie beschrieben können auch separat gehandelt werden und werden als solche auch als Teil der Erfindung angesehen. Die separaten Lamellen 2 können wie beschrieben ausgebildet sein und Befestigungseinrichtungen hin zu einem Strahlungsenergiesammler 1 aufweisen, wobei die Befestigungseinrichtung 5 wie beschrieben ausgebildet sein kann.

Es können auch mehrere Lamellen 2 zu einer Lamellenanordnung verbaut sein, die als Ganzes auf Strahlungsenergiesammler 1 zusätzlich aufgesetzt werden können. Auch insoweit sind dann Verbindungseinrichtungen vorgesehen, um die Lamellenanordnung mit dem Strahlungsenergiesammler 1 zu verbinden, etwa Clipse für die Fluidführungen, die einerseits an den Lamellen etwa mittels eines Rastgelenks befestigt sein und die andererseits aus nachgiebigem Material oder sonst wie flexibel gefertigt sind und mindestens einen Teilumfang der Fluidführungen 3 umgreifen, o. ä..

Wenn der Strahlungsenergiesammler mehrere geradlinige, parallel verlaufende und vorzugsweise in paralleler oder serieller Fluidverbindung stehende Fluidführungen, insbesondere Vakuumröhrenkollektoren, aufweist, denen jeweils ein Reflektor zugeordnet ist, können diese mehreren Reflektoren als entsprechend geformtes, einstückiges Bauteil, etwa ein geeignet profiliertes Blech mit spiegelnder Oberfläche, ausgebildet sein.

Nachfolgend wird eine weitere Ausführungsform der Erfindung beschrieben, die zusammen mit den bisher beschriebenen Merkmalen der Erfindung verwendet werden können, insbesondere mit den Lamellen 2, oder unabhängig davon bzw. ohne sie.

Beispielsweise die Figuren 1, 2 und 5, aber auch andere, zeigen, dass die Rückseite des Strahlungsenergiesammlers 1 mit einer Isolierschicht 11 versehen ist. Die Isolierschicht dient der thermischen Isolierung des mit dem Paneel bedachten bzw. bewandeten Gebäudes. Sie ist so ausgelegt, dass der Wärmeverlust des Gebäudes bei kalten Außentemperaturen verringert wird. Die Auslegung kann so sein, dass die Isolierwirkung der Isolierschicht 11 modernen Erfordernissen, insbesondere wirtschaftlichen Überlegungen betreffend Energieeffizienz und/oder gesetzlichen bzw. verordneten Bestimmungen zur Isolierung von Gebäuden am jeweiligen Verbauort genügt.

Das Material der Isolierung bzw. die Materialkombination bei mehrlagigen oder gemischten Materialien und die Materialstärke können so gewählt sein, dass Vorgaben hinsichtlich bauphysikalischer Werte wie Wärmeleitfähigkeit (Dimension W/K/m) und/oder Wärmedurchgangskoeffizient (U-Wert - Dimension W/K/m^2)) und/oder Wärmedurchlasskoeffizient erfüllt sind und/oder dass Zielvorgaben hinsichtlich Energieeinsatz erfüllt sind. Für Deutschland kann hier das Regelungswerk aus Energieeinsparungsgesetz und Energieeinsparverordnung (insbesondere EnEV 2009, EnEV 2014, Anhang 1 Tabelle 1 dazu) maßgeblich sein und/oder Normen oder Standards, etwa DIN 4108, DIN 4701-10, DIN V 18599.

Der Wärmedurchgangskoeffizient der Isolierschicht oder des Gesamtaufbaus kann - abhängig vom Verbauort (Dach, Wand, ...) den Vorgaben der folgenden Tabelle genügen oder besser (kleiner) sein:

| Verbauort im Gebäude | Obergrenze Wärmedurchgangskoeffizient |
|---|---|
| Außenwand, Geschossdecke gegen Außenluft | U ≤ 0,28 W/(m²•K) |
| Dach, oberste Geschossdecke, Wände zu Abseiten | U ≤ 0,20 W/(m²•K) |

Die eingehaltenen U-Werte (Obergrenzen) können auch 10% oder 20% oder 30% kleiner als die oben angegebenen Werte sein.

Es wird damit möglich, zusammen mit dem Verbau des Strahlungsenergiesammlers 1 auch das Gebäude zu decken oder zu bewanden und das Dach bzw. die Wand energetisch so auszuführen, dass es modernen Erfordernissen, die faktisch oder gesetzlich bzw. durch Verordnung vorgegeben sind, genügt. Die Isolierung 11 kann dabei auch dem Zweck dienen, an warmen Tagen die Überhitzung der Innenseite des Paneels 1 aufgrund der von außen einstrahlenden Strahlung zu verhindern. Vor allem aber dient die Isolierung der deutlichen Verringerung von Wärmeverlust durch Wärmeleitung von der Innenseite zur Außenseite des Strahlungsenergiesammlers bzw. Paneels 1.

Der Strahlungsenergiesammler kann eine Dampfsperre und/oder Wetterschutzschicht 12 aufweisen, die das Eindringen von Feuchtigkeit verhindert, und die mechanisch ausreichend widerstandsfähig gegen Umwelteinflüsse ist (Windlast, Hagelschlag, ...). Es kann sich hierbei um ein metallisches Material oder um ein Kunststoffmaterial oder um ein Kompositmaterial handeln. Die Außenoberfläche der Wetterschutzschicht 12 kann die reflektierende Fläche des Reflektors 6 bilden. Andererseits kann der Reflektor 6 auch als separate Schicht 13 mit außen verspiegelter Oberfläche gebildet werden. Wie in Fig. 1a angedeutet, können Isolierschicht 11 und Wetterschutzschicht 12 und ggf. Reflektorschicht 13 formschlüssig-flächig miteinander verbunden sein, sodass keine Freiräume entstehen.

Die Rückseite der Isolierschicht 11 (Gebäudeinnenseite) kann flach bzw. eben sein und kann eine Innenausbauschicht 14 aufweisen, die als innen zugängliche bzw. sichtbare Wand eines Innenraums (Dachraums) dienen kann. Es kann sich beispielsweise um eine Kartonageschicht oder eine Gipskartonschicht handeln. Wie in Figuren 1a und 4a - c gezeigt, kann die Innenoberfläche der Isolierschicht bzw. der Innenausbauschicht 14 mindestens bereichsweise eben und flach sein und formschlüssig an der Isolierschicht anliegen.

Sie kann aber auch Strukturierungen aufweisen, etwa Aussparungen, um den Anbau des Strahlungsenergiesammlers an tragende Strukturen der Dachkonstruktion oder Wandkonstruktion zu erlauben. Die Aussparungen können punktuelle Öffnungen sein oder längliche Aussparungen, etwa entsprechend Haltepunkten oder Dachsparren oder ähnlichem. Im Bereich dieser Aussparungen kann die Dicke der Isolierschicht dementsprechend geringer sein als jenseits der Aussparungen.

Die Isolierschicht 11 kann über ein Paneel hinweg betrachtet nur teilweise ausgebildet sein oder in unterschiedlichen Bereichen des Paneels unterschiedlich dick ausgebildet sein. So können z. B. Vordachbereiche des Paneels ausgebildet sein, die keine oder nur eine dünnere Isolierschicht 11 aufweisen.

Fig. 5 zeigt Aussparungen 54 und 55 in der Isolierschicht 11. Es kann sich hier um Aussparungen handeln, die die Zulaufleitung 51 und/oder die Rücklaufleitung 52 der Fluidführung 3 (z.B. Vakuumröhrenabsorber) und/oder eine Heizleitung 53 aufnehmen. Die Aussparungen können an einer Oberfläche des Isolierkörpers (z.B. wie in Fig. 5 gezeigt seitlich oder auch rückseitig) liegen oder vollständig im Inneren der Isolierschicht.

Weitere, nicht gezeigte Aussparungen können vorliegen, um elektrische und/oder Fluid-Verbindungseinrichtungen zu benachbarten Paneelen oder weiteren Komponenten des Aufbaus zu schaffen. Auf diese Weise können Vorlauf- und Rücklaufleitungen 51, 52 im Paneel selber untergebracht werden, ohne dass sie zusätzlich Bauraum benötigen. Gleichzeitig sind sie thermisch gegen Wärmeverlust sowie gegen Einfrieren isoliert.

Weiterhin kann eine Heizleitung 53 in der Isolierschicht 11 eingebettet sein. Sie kann unmittelbar an der Wetterschutzschicht 12 oder am Reflektorblech 13 anliegen. Eine Heizleitung 53 kann den Reflektorbereich beheizen, sodass ggf. vorhandener Schnee bzw. Eis weggeschmolzen werden kann, so dass der Reflektor 6 in Verbindung mit dem Absorber wieder operativ werden. Es können ggf. auch mehrere Heizleitungen 53 an unterschiedlichen Bereichen des Reflektors 6 vorgesehen sein.

Fig. 5 deutet einen Verlauf der Fluidleitungen 51 - 53 (Vorlauf, Rücklauf, Heizung) parallel zur absorbierenden Fluidführung 3 des Strahlungsenergiesammlers 1 an. Die Verläufe können aber auch anders sein, je nach Bedarf, etwa rechtwinklig dazu, oder parallel und rechtwinklig. Die Leitungen 51, 52, 53 können formschlüssig in die Isolierschicht 11 eingebettet (eingegossen) sein oder in Kanälen nicht formschlüssig verlaufen.

Die Isolierschicht 11 kann an ihrer dünnsten Stelle (tiefster Punkt des ggf. vorhandenen Reflektors 6) eine Dicke von mindestens 10 mm oder mindestens 20 mm oder mindestens 30 mm aufweisen. Das Material kann ein ausgehärteter Kunststoffschaum sein, etwa PU-Schaum (Polyurethanschaum). Er kann fest genug sein, um als Träger 4 für die weiteren Komponenten zu dienen, insbesondere für Fluidführung 3 mit der Wetterschutzschicht 12 bzw. Reflektorschicht 13 und mit der Innenausbauschicht 14 und ggf. mit seitlichen und stirnseitigen Begrenzungen zu dienen und so eine verbaubare Einheit zu bilden. Oder das Material kann Mineraldämmwolle oder Holzfaserdämmstoff sein oder aufweisen. Soweit das Material der Isolierschicht nicht selbsttragend steif bzw. fest ist, können weitere tragende Elemente, etwa ein Rahmen 4, zur steifen, verbaubaren Verbindung der einzelnen Komponenten vorgesehen sein, insbesondere zur Verbindung der Fluidführung 3 mit der Wetterschutzschicht 12 bzw. Reflektorschicht 13 und mit der Innenausbauschicht 14 und ggf. mit seitlichen und stirnseitigen Begrenzungen, soweit nötig.

Die Auslegung der Isolierschicht kann so sein, dass sie im Ergebnis normgerecht ist bzw. gesetzeskonform oder regelungskonform und dementsprechend vorgegebene Werte einhält oder zur besseren Seite hin übertrifft, etwa gegebene Wärmeleitwerte, U-Werte, k-Werte oder ähnliches.

Allgemein gesprochen kann der Strahlungsenergiesammler zum Verbau mit weiteren, insbesondere gleichartigen Strahlungsenergiesammlern ausgelegt sein. Er kann deshalb nicht gezeigte Einrichtungen zur mechanischen und/oder fluidischen und/oder ggf. elektrischen Verbindung mit anderen Strahlungsenergiesammlern aufweisen. Verbindungseinrichtungen für Mechanik, Fluid und Elektrik (Energie und/oder Signale) können aber auch für übergeordnete Komponenten, etwa Fluidverteiler oder elektrische Steuerungsleitungen vorgesehen sein.

Merkmalskombinationen der Erfindung können - nicht abschließend und nicht ausschließlich - wie folgt aufgelistet werden:
A. Siehe Patentansprüche.
B. Paneelartiger Strahlungsenergiesammler (1) zum Sammeln von Strahlungsenergie einer Quelle, insbesondere der Sonne, vorzugsweise nach oben A, mit einer Fluidführung (3) und mit einer mit der Fluidführung (3) direkt oder indirekt verbundene Isolierschicht (11), die von der Quelle aus betrachtet hinter der Fluidführung (3) oder hinter einem der Fluidführung zugeordneten Reflektor (6) liegt und als Wärmedämmung eines den Strahlungsenergiesammler (1) tragenden Dach- oder Wandbereichs eines Gebäudes ausgelegt ist.
C. Strahlungsenergiesammler (1) nach oben B, mit einer Wetterschutzschicht (12) zwischen Fluidführung (3) und Isolierschicht (11), die flächig bzw. formschlüssig mit dem Material der Isolierschicht verbunden sein kann.
D. Strahlungsenergiesammler (1) nach oben B oder C, mit einem ersten Reflektor (6) mit einem konkaven Bereich zum Reflektieren von Strahlung von der Quelle zur Fluidführung (3) zwischen Isolierschicht (11) und Fluidführung, wobei der Reflektor (6) eine Oberfläche der Wetterschutzschicht (12) nach Anspruch 12 sein kann und wobei das Material der Isolierschicht (11) bzw. die Wetterschutzschicht flächig bzw. formschlüssig mit der Reflektorrückseite verbunden sein kann.
E. Strahlungsenergiesammler (1) nach einem oder mehreren der obigen Teile B bis D, dadurch gekennzeichnet, dass er als geradlinig, insbesondere rechtwinklig begrenztes Paneel gebaut ist, das mehrere geradlinige, parallel verlaufende und in paralleler oder serieller Fluidverbindung stehende Fluidführungen (3), insbesondere Vakuumröhrenkollektoren, aufweist, denen jeweils ein erster Reflektor (6) zugeordnet ist, der länglich und sich in Richtung der Fluidführung (3) erstreckend ausgebildet ist.
F. Strahlungsenergiesammler (1) nach einem oder mehreren der obigen Teile B bis E, gekennzeichnet durch einen oder mehrere in die Isolierschicht (11) eingebettete Fluidleitungen (51 - 53) für Zulauf und/oder Ablauf des Fluids in der Fluidführung und/oder für die Reflektorbeheizung.
G. Strahlungsenergiesammler (1) nach einem oder mehreren der obigen Teile B bis F, dadurch gekennzeichnet, dass die Isolierschicht (12) auf ihrer Innenseite eine an eine Dachunterkonstruktion angepasste Formgebung und/oder Gestaltung aufweist, insbesondere eine oder mehrere Aussparungen entsprechend Dachsparren und/oder anderer tragender Elemente.
H. Strahlungsenergiesammler (1) nach oben D, dadurch gekennzeichnet, dass die Isolierschicht (11) eine Dicke von mindestens 10 mm aufwiest und/oder einen Kunststoffschaum, insbesondere PU-Schaum, und/oder Mineraldämmwolle und/oder Holzfaserdämmstoff aufweist und/oder einen Wärmedurchgangskoeffizienten (U-Wert) gemäß folgender Tabelle aufweist:

| Verbauortim Gebäude | Obergrenze Wärmedurchgangskoeffizient |
|---|---|
| Außenwand, Geschossdecke gegen Außenluft | U ≤ 0,28 W/(M²•K) |
| Dach, oberste Geschossdecke, Wände zu Abseiten | U ≤ 0,20 W/(m²•K) |

I. Strahlungsenergiesammler (1) nach einem oder mehreren der obigen Punkte B bis H, bei dem die Isolierschicht (11) auf der Innenseite mindestens bereichsweise flach ausgebildet ist, aber Vertiefungen wie punktuellen Löcher oder länglichen Nuten für die Aufnahme tragender Strukturen des Dachs aufweisen kann, wobei die flache Innenseite der Isolierschicht mit einer weiteren Schicht bedeckt sein kann, die als zugängliche Innenoberfläche eines Innenraums dienen kann, etwa eine Gipskartonschicht.
J. Strahlungsenergiesammler nach einem oder mehreren der obigen Punkte, mit einer ersten mechanischen Verbindungseinrichtung zur mechanischen Verbindung mit einem weiteren Strahlungsenergiesammler und/oder einer zweiten Fluid-Verbindungseinrichtung zur Fluid-Verbindung mit einem weiteren Strahlungsenergiesammler und/oder einer dritten elektrischen Verbindungseinrichtung zur elektrischen Verbindung mit einem weiteren Strahlungsenergiesammler.

## Patentansprüche

1. Strahlungsenergiesammler (1) zum Sammeln von Strahlungsenergie einer Quelle, insbesondere der Sonne, mit einem ersten Träger (4, 11)und einer am Träger (4) angebrachten strahlungsabsorbierenden Fluidführung (3),
**gekennzeichnet durch**
eine oder mehrere direkt oder indirekt am Träger (4) befestigten Lamellen (2) im Strahlungsweg vor der strahlungsabsorbierenden Fluidführung (3) und/oder mit direkt oder indirekt am Träger (4) befestigten Anbringungsvorrichtungen (5) hierfür.

2. Strahlungsenergiesammler (1) nach Anspruch 1, mit einem ersten Reflektor (6) mit einem konkaven Bereich zum Reflektieren von Strahlung von der Quelle zur strahlungsabsorbierenden Fluidführung (3).

3. Strahlungsenergiesammler (1) nach Anspruch 1 oder 2, mit mehreren Lamellen (2a, 2b), die in Strahlungsrichtung betrachtet mindestens zwei unterschiedliche Größen bzw. Abmessungen haben, wobei Lamellen (2) mit kleinerer Größe bzw. Abmessung näher an der Fluidführung (3) angebracht sein können als Lamellen (2) mit größerer Größe bzw. Abmessung.

4. Strahlungsenergiesammler (1) nach einem oder mehreren der vorherigen Ansprüche, **dadurch gekennzeichnet, dass** eine oder mehrere oder alle Lamellen (2) eine Farbe und/oder eine der Quelle zugewandte Kante (21) mit einer ungeradlinigen, insbesondere wellenlinienförmigen Kontur aufweist, die nach ästhetischen Gesichtspunkten bestimmt sein kann.

5. Strahlungsenergiesammler (1) nach einem oder mehreren der vorherigen Ansprüche, **dadurch gekennzeichnet, dass** ein oder zwei Anstellwinkel einer oder mehrerer Lamellen (2) nach dem Verbau des Strahlungsenergiesammlers (1) einstellbar sind.

6. Strahlungsenergiesammler (1) nach einem oder mehreren der vorherigen Ansprüche, **dadurch gekennzeichnet, dass** eine oder mehrere der Lamellen (2) planflächige Elemente sind, die selbsttragend und witterungsbeständig sein können und die als Material Metall, insbesondere Aluminium, und/oder einen Kunststoff aufweisen können.

7. Strahlungsenergiesammler nach einem oder mehreren der vorherigen Ansprüche, **dadurch gekennzeichnet, dass** die Befestigungseinrichtung (5) zur Befestigung einer Lamelle (2) am Reflektor (6) oder am Träger (4, 11) oder an der Fluidführung (3) ausgelegt ist.

8. Strahlungsenergiesammler (1) nach Anspruch 2, mit einem, zwei oder mehreren zweiten Reflektoren (9), der sich im Öffnungsbereich des ersten Reflektors (6) oder davor befindet und mit einer oder mehreren der Lamellen (2) verbunden oder daran angebracht sein kann, wobei sich der zweite Reflektor (9) längs der Fluidführung (3) erstrecken und ein von der Fluidführung weg oder zur Mittenebene des ersten Reflektors hin offenes konkaves Querschnittsprofil aufweisen kann.

9. Strahlungsenergiesammler (1) nach einem oder mehreren der vorherigen Ansprüche, **dadurch gekennzeichnet, dass** er als geradlinig, insbesondere rechtwinklig begrenztes Paneel gebaut ist, das mehrere geradlinige, parallel verlaufende und in paralleler oder serieller Fluidverbindung stehende Fluidführungen, insbesondere Vakuumröhrenkollektoren, aufweist, denen jeweils ein erster Reflektor (6) zugeordnet ist, der länglich und sich in Richtung der Fluidführung (3) erstreckend ausgebildet ist.

10. Strahlungsenergiesammler (1) nach einem oder mehreren der vorherigen Ansprüche, **dadurch gekennzeichnet, dass** eine oder mehrere der Lamellen (2) rechtwinklig zur Fluidführung oder parallel zu ihr verlaufen und/oder so eingestellt oder einstellbar sind, dass sie im verbauten Zustand des Strahlungsenergiesammlers an einem Referenztag, insbesondere 21. Dezember vorzugsweise zum Sonnenhöchststand am Verbauort um höchstens ±5° oder höchstens ±3° gegen die Ekliptik geneigt sind.

11. Strahlungsenergiesammler (1) nach einem oder mehreren der vorherigen Ansprüche, **dadurch gekennzeichnet, dass** mehrere oder alle Lamellen (2) in ihrer Winkellage so eingestellt oder einstellbar sind, dass sie im verbauten Zustand des Strahlungsenergiesammlers an einem kalten Referenztag zu einem Referenzzeitpunkt, vorzugsweise Ortsmittag, oder über den Tag integriert eine minimal wirksame Abschattung bewirken oder gegenüber einer solchen Einstellung um höchstens ±5° oder höchstens ±3° verstellt sind, wobei der Referenztag die Wintersonnenwende oder ein Tag im Oktober oder November sein kann.

12. Strahlungsenergiesammler (1) nach einem oder mehreren der vorherigen Ansprüche, **dadurch gekennzeichnet, dass** mehrere oder alle Lamellen (2) so dimensioniert, insbesondere so groß bzw. breit sind, dass sie im verbauten Zustand des Strahlungsenergiesammlers an einem warmen Referenztag zu einem Referenzzeitpunkt, vorzugsweise Ortsmittag, oder über den Tag integriert eine vorbestimmte Mindestabschattung bewirken oder von einer solchen Dimensionierung um höchstens ±5° oder höchstens ±3° abweichen, wobei der warme Referenztag die Sommersonnenwende oder ein Tag im Juli oder August sein kann, wobei die relative Mindestabschattung mehr als einer der Werte 30%, 50%, 70%, 90% oder 100% der einfallenden Strahlung sein kann.

13. Strahlungsenergiesammler nach einem oder mehreren der vorherigen Ansprüche, **dadurch gekennzeichnet, dass** eine oder mehrere oder alle Lamellen (2) eine der Quelle zugewandte Kante (21) mit einem oder mehreren Vorsprüngen (42) aufweist.

14. Lamelle für einen Strahlungsenergiesammler (1) zum Sammeln von Strahlungsenergie einer Quelle, insbesondere der Sonne, mit einem planflächigen Element, das selbsttragend und witterungsbeständig sein kann und das als Material Metall, insbesondere Aluminium, und/oder einen Kunststoff aufweisen kann, und mit einer zweiten Verbindungseinrichtung zum Verbinden der Lamelle mit einem Strahlungsenergiesammler (1) oder einem Lamellenträger.

15. Lamellenanordnung mit einem Lamellenträger, mehreren daran angebrachten Lamellen (2) nach Anspruch 12 und einer dritten Verbindungseinrichtung zum Verbinden der Lamellenanordnung mit einem Strahlungsenergiesammler.

16. Strahlungsenergiesammler (1) nach einem oder mehreren der vorherigen Ansprüche, **gekennzeichnet durch** eine mit der Fluidführung (3) direkt oder indirekt verbundene Isolierschicht (11), die von der Quelle aus betrachtet hinter der Fluidführung (3) oder hinter einem der Fluidführung zugeordneten Reflektor (6) liegt und als Wärmedämmung eines den Strahlungsenergiesammler (1) tragenden Dach- oder Wandbereichs eines Gebäudes ausgelegt ist.

17. Strahlungsenergiesammler (1) nach einem oder mehreren der vorherigen Ansprüche, **gekennzeichnet durch** einen Antrieb (110) für eine oder mehrere Lamellen (2) zur Veränderung und Einstellung des **durch** die Lamellen bewirkten Beschattungsgrades, ggf. einen oder mehrere Sensoren (112) zur Erfassung relevanter Daten, insbesondere Temperaturdaten und/oder Strahlungsdaten, und ein mit dem Antrieb (110) oder einem Treiber dafür und mit den relevanten Sensoren verbundenen Steuerungsgerät (111), das nach Maßgabe einer oder mehrerer Regelungsstrategien (111a, 111b) Steuerungssignale für den Antrieb (110) erzeugt.
